# EUROPÄISCHE PATENTANMELDUNG

(11) **EP 4 708 050 A1**
(43) Veröffentlichungstag der Anmeldung: **11.03.2026**
(21) Anmeldenummer: 24198403.8
(22) Anmeldetag: 04.09.2024
(51) Int. Cl.: G06F 11/07, G06F 11/22, G06F 11/3668, G06F 11/3698

(54) **VERFAHREN ZUR IDENTIFIKATION VON FEHLERN BEI EINER INTEGRATION VON SERVICE-KOMPONENTEN IN EINEM SYSTEM ANHAND EINER SYSTEMSPEZIFISCHEN FEHLERTAXONOMIE, STEUERVORRICHTUNG, COMPUTERPROGRAMM UND ELEKTRONISCH LESBARER DATENTRÄGER**

(71) Anmelder: Siemens Aktiengesellschaft, 80333 München (DE)
(72) Erfinder: Gregor, Lena, 85579 Neubiberg (DE); Hentschel, Anja, 81735 München (DE); Sauer, Horst, 80689 München (DE)
(74) Vertreter: Siemens Patent Attorneys

(57) **Zusammenfassung**

Die Erfindung betrifft ein Verfahren zur Identifikation von Integrationsfehlern bei einer Integration von Service-Komponenten in einem System (12) anhand einer systemspezifischen Integrationsfehlertaxonomie (16) durch eine Prüfvorrichtung (10), wobei in der Prüfvorrichtung (10) eine Basis-Integrationsfehlertaxonomie (14) gespeichert ist, die Integrationsfehlerklassen (20) definiert, wobei den jeweiligen Integrationsfehlerklassen (20) jeweilige Integrationsfehlerarten (22) zugewiesen sind, wobei das Verfahren die folgenden durch eine Prüfvorrichtung (10) durchzuführenden Schritte umfasst: Durchführen eines Zuordnungsverfahrens, wobei zumindest einigen der Integrationsfehlerarten (22) der Basis-Integrationsfehlertaxonomie (14) jeweilige Integrationsfehlererkennungsverfahren (26) zugeordnet werden; Empfangen von Systeminformationen über das System (12); Durchführen eines Spezialisierungsverfahrens, wobei basierend auf der Basis-Integrationsfehlertaxonomie (14) eine systemspezifischen Integrationsfehlertaxonomie (16) zur Untersuchung des Systems (12) in Abhängigkeit von den Systeminformationen generiert wird; Durchführen eines Auswahlverfahrens, wobei zumindest einigen der Integrationsfehlerarten (22) der systemspezifischen Integrationsfehlertaxonomie (16) jeweilige der Integrationsfehlererkennungsverfahren (26) in Abhängigkeit von den Systeminformationen zugeordnet werden.

## Beschreibung

Die Erfindung betrifft ein Verfahren zur Identifikation von Integrationsfehler bei einer Integration von Service-Komponenten in einem System anhand einer systemspezifischen Integrationsfehlertaxonomie, eine Prüfvorrichtung, die zum Durchführen eines Verfahrens zur Identifikation von Integrationsfehler in einem System anhand einer systemspezifischen Integrationsfehlertaxonomie eingerichtet ist, ein Computerprogramm und einen elektronisch lesbaren Datenträger.

In den letzten Jahren hat sich der Trend zur Verwendung von Service-Komponenten im industriellen Kontext durchgesetzt, wobei Mikroservices und Makroservices sowie andere Komponenten mit Service-Charakter eingesetzt werden. Die Begriff "System" und "Service-Komponente" sind wie folgt definiert.

Ein System besteht aus Software- und Hardware-Bestandteilen, darunter einer Sammlung von "Service-Komponenten". Eine Service-Komponente zeichnet sich durch individuelle Geschäftsfähigkeiten aus, die sie von anderen Service-Komponenten unterscheidet. Sie kann einzeln bereitgestellt, installiert/eingesetzt und ausgeführt werden. Die Kommunikation mit anderen Komponenten des Systems erfolgt über leichtgewichtige synchrone oder asynchrone Mechanismen wie REST-APIs, Message Queues oder industriespezifische Protokoll Stacks. Service-Komponenten können verteilt und skalierbar sein.

Bei der Entwicklung und dem Betrieb von Systemen mit Service-Komponenten lässt sich beobachten, dass die Tests einzelner Service-Komponenten gut durch etablierte Testverfahren beherrscht werden und die Verantwortung für die Komponente von (agilen) Teams getragen wird. Allerdings treten immer wieder große Probleme bei der Integration dieser Service-Komponenten auf, systematische Herangehensweisen fehlen oft. Neue Integrationsfehlerquellen entstehen durch den Einsatz ungewohnter Methoden und Technologien wie DevOps, Cloud oder asynchrone Kommunikation. Integrationsfehler im Betrieb sind schwer vorherzusehen, insbesondere aufgrund des typischerweise emergenten Verhaltens der Service-Komponenten. Erprobte Methoden zum Testdesign und zur Ermittlung von Testabdeckung für Integrationstests stehen nicht zur Verfügung. Bestehende Integrationsfehlertaxonomien für monolithische oder objektorientierte Systeme sind unzureichend, da zum Beispiel Aspekte der Verteilung und Einbindung in die Ablaufumgebung (Infrastruktur, Target Environment) nicht berücksichtigt werden.

Die Testverfahren für die Integration von Systemen mit Service-Komponenten können in erfahrungsbasierte oder eher zufällige Verfahren unterteilt werden. Diese Verfahren sind jedoch oft unzureichend, um alle potenziellen Integrationsfehlerquellen zu berücksichtigen und sicherstellen, dass das System fehlerfrei funktioniert.

Existierende Integrationsfehlertaxonomien sind nicht immer hilfreich bei der Klassifizierung von Integrationsfehlern bei der Integration von Systemen mit Service-Komponenten. Der Stand der Technik ist oft veraltet, und bezieht sich zum Beispiel auf ältere Architekturen wie SOA oder klassische Software-Systeme, die in Literatur und Forschung behandelt werden.

Bei den betreffenden Systemen handelt es sich häufig um Systeme mit einer Mischung aus Software- und Hardware-Anteilen. Verfügbare Taxonomien berücksichtigen dies oft nicht, wodurch ihre Anwendbarkeit eingeschränkt ist.

Zusätzlich sind verfügbare Integrationsfehlertaxonomien nicht immer auf heutige Architekturen wie Microservice-basierte Systeme oder Internet of Things (loT)-Systeme anwendbar. Diese modernen Architekturen erfordern eine spezifischere Herangehensweise bei der Klassifizierung und Analyse von Integrationsfehlern, die in existierenden Taxonomien nicht berücksichtigt wird.

Es ist eine Aufgabe der vorliegenden Erfindung, ein Verfahren zur Identifikation von Integrationsfehler in einem System bereitzustellen. Es ist insbesondere eine Aufgabe der Erfindung, das Verfahren für servicebasierte Systeme bereitzustellen, um die spezifischen Integrationsfehler, die bei der Integration in den servicebasierten Systemen auftreten, identifizieren zu können.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die vorliegende Erfindung zielt darauf ab, diese Herausforderungen zu adressieren, indem sie eine Methode zur Klassifizierung und Analyse von Integrationsfehlern in Systemen mit Service-Komponenten bereitstellt. Die Anwendungsbereiche umfassen alle Bereiche, die Systeme mit Service-Komponenten entwickeln, wie hochkomplexe modulare Projekte im DevOps-Kontext, z.B. Anlagensteuerung, Grid Control, Plattformen für Betrieb und Control von Bahn-Infrastruktur, Plattformen für digitale Dienste im Krankenhaus sowie Betrieb und Überwachung von Gebäudetechnik.

Die Erfindung stellt einen systematischen Ansatz zur Verfügung, um Integrationsfehler bei der Integration von Service-Komponenten zu finden und auf dieser Basis eine quantifizierte Bewertung der Korrektheit der Funktionalität des Systems zu treffen. Basis ist eine vordefinierte Integrationsfehlertaxonomie, die dem System und seinem Anwendungskontext angepasst werden kann.

Ein erster Aspekt der Erfindung betrifft ein Verfahren zur Identifikation von Integrationsfehlern bei einer Integration von Service-Komponenten in einem System anhand einer systemspezifischen Integrationsfehlertaxonomie durch eine Prüfvorrichtung. Bei dem System kann es sich insbesondere um eine Steuervorrichtung oder eine Gruppe von Steuervorrichtungen handeln, welche zum Betreiben von Service-Komponenten, beispielsweise Mikroservices, eingerichtet sind und/oder die Service-Komponenten selbst. In der Prüfvorrichtung ist eine Basis-Integrationsfehlertaxonomie gespeichert. Die Basis-Integrationsfehlertaxonomie definiert Integrationsfehlerklassen, wobei den jeweiligen Integrationsfehlerklassen jeweilige Integrationsfehlerarten zugewiesen sind. Die Integrationsfehlerarten betreffen potentielle Integrationsfehler, die in dem System auftreten können. Die Integrationsfehlerarten sind in die Integrationsfehlerklassen gruppiert.

Das Verfahren umfasst die folgenden Schritte, die durch die Prüfvorrichtung geführt werden.

Ein erster Schritt umfasst ein Empfangen einer Verfahrensliste. Die Verfahrensliste umfasst bereitgestellte Integrationsfehlererkennungsverfahren, die durch die Prüfvorrichtung zur Erkennung von Integrationsfehlern in dem System angewandt werden können. Es ist vorgesehen, dass den jeweiligen Integrationsfehlererkennungsverfahren die Integrationsfehlerarten zugeordnet sind, die durch das jeweilige Integrationsfehlererkennungsverfahren identifiziert werden können. Mit anderen Worten ist die Prüfvorrichtung zur Anwendung der Integrationsfehlererkennungsverfahren eingerichtet, um die den Integrationsfehlererkennungsverfahren zugeordneten Integrationsfehlerarten in dem System zu identifizieren. Die bereitgestellten Integrationsfehlererkennungsverfahren, sind in der Verfahrensliste bereitgestellt. Durch die Bereitstellung der Verfahrensliste ist es möglich, der Prüfvorrichtung einen aktuellen Stand der Integrationsfehlererkennungsverfahren bereitzustellen.

Ein weiterer Schritt umfasst ein Durchführen eines Zuordnungsverfahrens durch die Prüfvorrichtung. In dem Zuordnungsverfahren wird zumindest einigen der Integrationsfehlerarten der Basis-Integrationsfehlertaxonomie jeweilige der Integrationsfehlererkennungsverfahren zugeordnet. Mit anderen Worten umfasst die Basis-Integrationsfehlertaxonomie die Integrationsfehlerklassen und die Integrationsfehlerarten, welche in dem System auftreten können und deren Anwesenheit durch die Prüfvorrichtung zu prüfen ist. Zur Identifikation der in der Basis-Integrationsfehlertaxonomie beschriebenen Integrationsfehler ist es erforderlich, den Integrationsfehlern die betreffenden Integrationsfehlererkennungsverfahren zuzuordnen. Zu diesem Zweck wird durch die Prüfvorrichtung ermittelt, welches der Integrationsfehlererkennungsverfahren der Verfahrensliste zur Identifikation der betreffenden Integrationsfehler eingerichtet ist und ordnet den betreffenden Integrationsfehlerarten der Basis-Integrationsfehlertaxonomie das jeweilige Integrationsfehlererkennungsverfahren zu. Die Verfahrensliste kann beispielsweise den jeweiligen Integrationsfehlererkennungsverfahren die betreffenden Integrationsfehlerarten in einer Metaangabe zuordnen, sodass die Prüfvorrichtung basierend auf den Metaangaben die Integrationsfehlererkennungsverfahren in der Basis-Integrationsfehlertaxonomie zuordnen kann. Mit der Zuordnung ist es der Prüfvorrichtung somit ermöglicht, anhand der Basis-Integrationsfehlertaxonomie, die betreffenden Integrationsfehler in dem System mittels der zugeordneten Integrationsfehlererkennungsverfahren zu identifizieren. Die Basis-Taxonomie ist jedoch unspezifisch, das bedeutet, dass sie ein Allgemeines vorgehen zur Integrationsfehleridentifikation beschreibt, ohne auf das zu prüfende System individuell einzugehen.

Um eine Taxonomie zum Prüfen eines konkreten Systems auf Basis der Basis-Integrationsfehlertaxonomie bereitzustellen, umfasst ein weiterer Schritt des Verfahrens ein Empfangen von Systeminformationen über das zu überprüfende System. Die Systeminformationen können beispielsweise Informationen über Hardwaremodule und/oder Softwaremodule des Systems, sowie deren Version umfassen. Die Prüfvorrichtung ist dazu eingerichtet, auf Basis der Systeminformationen zu ermitteln, welche der in der Basis-Integrationsfehlertaxonomie beschriebenen Integrationsfehlerarten für das zu prüfende System relevant sind und somit zu Prüfen sind.

Um die Basis-Integrationsfehlertaxonomie auf das konkrete System abzustimmen, umfasst das Verfahren umfasst ein Spezialisierungsverfahren dass durch die Prüfvorrichtung durchgeführt wird. Das Spezialisierungsverfahren umfasst eine Ermittlung einer systemspezifischen Integrationsfehlertaxonomie zur Untersuchung des Systems. Die systemspezifische Integrationsfehlertaxonomie basiert auf der Basis-Integrationsfehlertaxonomie. Mit anderen Worten werden relevante der Integrationsfehlerarten, welche in der Basis-Integrationsfehlertaxonomie beschrieben sind, in Abhängigkeit von den Systeminformationen zur Erstellung der systemspezifischen Integrationsfehlertaxonomie verwendet. Dabei erfolgt die Generierung der systemspezifischen Integrationsfehlertaxonomie in Abhängigkeit von den Systeminformationen, welche das zu untersuchende System beschreiben. Bei der systemspezifischen Integrationsfehlertaxonomie kann es sich um eine Taxonomie handeln, welche nur die Integrationsfehlerarten und Integrationsfehlerklassen der Basis-Integrationsfehlertaxonomie umfasst, welche für die Untersuchung des durch die Systeminformationen beschriebenen Systems relevant sind.

Neben den Integrationsfehlerarten, können auch die anzuwendenden Integrationsfehlererkennungsverfahren von dem durch die Systeminformationen beschriebenen System abhängen. Aus diesem Grund umfasst ein weiterer Schritt des Verfahrens ein Durchführen eines Auswahlverfahrens. In dem Auswahlverfahren werden zumindest einigen der Integrationsfehlerarten der systemspezifischen Integrationsfehlertaxonomie jeweilige der Integrationsfehlererkennungsverfahren, welche den Integrationsfehlerarten in der Basis-Integrationsfehlertaxonomie zugeordnet sind in Abhängigkeit von dem Systeminformationen zugeordnet. Es kann beispielsweise sein, dass in der Basis-Integrationsfehlertaxonomie einer bestimmten Integrationsfehlerart mehrere geeignete Integrationsfehlererkennungsverfahren zur Erkennung der Integrationsfehler zugeordnet sind. In Abhängigkeit von den Systeminformationen werden zumindest einige der Integrationsfehlererkennungsverfahren der Basis-Integrationsfehlertaxonomie ausgewählt und der systemspezifischen Integrationsfehlertaxonomie zugeordnet. Es kann beispielsweise sein, dass bestimmte der Integrationsfehlererkennungsverfahren in dem System gemäß der Systeminformationen nicht geeignet oder nicht mit dem System kompatibel sind. Dementsprechend können die geeigneten Integrationsfehlererkennungsverfahren in Abhängigkeit von den Systeminformationen ausgewählt werden. Nach Abschluss des Auswahlverfahrens ist die systemspezifische Integrationsfehlertaxonomie zum Untersuchen des Systems bereitgestellt. Die systemspezifische Integrationsfehlertaxonomie umfasst die für das System relevante Integrationsfehlerarten und Integrationsfehlerklassen sowie die für das System relevanten Integrationsfehlererkennungsverfahren Zuerkennung der betreffenden Integrationsfehlerarten. Ein weiterer Schritt umfasst eine Untersuchung des Systems gemäß der systemspezifischen Integrationsfehlertaxonomie durch die Prüfvorrichtung. Mit anderen Worten wird durch die Prüfvorrichtung die Untersuchung des Systems durchgeführt, wobei die in der systemspezifischen Integrationsfehlertaxonomie angeführten Integrationsfehlerarten auf ein Vorliegen mittels der zugewiesenen Integrationsfehlererkennungsverfahren überprüft werden. Die Untersuchung des Systems umfasst eine Generierung eines Integrationsfehlerprotokolls, wobei die in dem System durch die Integrationsfehlererkennungsverfahren gefundenen Integrationsfehler protokolliert sind.

In einem weiteren Schritt ist es vorgesehen, dass basierend auf dem Integrationsfehlerprotokoll eine Bewertung des Systems durch die Prüfvorrichtung durchgeführt wird. Die Bewertung kann beispielsweise von einer Quantität der gefundenen Integrationsfehler und/oder einer Qualität der gefundenen Integrationsfehler abhängen.

In einem weiteren Schritt wird durch die Prüfvorrichtung ein Ausgabesignal ausgeben, welches die Bewertung des Systems durch die Prüfvorrichtung umfasst. Das Ausgabesignal kann beispielsweise dazu vorgesehen sein, das System in Abhängigkeit von der Bewertung freizugeben oder zu sperren.

Eine Weiterbildung der Erfindung sieht vor, dass das Verfahren ein Empfangen von Anwendungsinformationen über eine Anwendung des Systems durch die Prüfvorrichtung umfasst. Mit anderen Worten werden durch die Prüfvorrichtung zusätzlich zu den Systeminformationen betreffend das System auch Anwendungsinformationen, welche sich über die Anwendung des Systems beschäftigen empfangen.

Es ist vorgesehen, dass das Spezialisierungsverfahren die Generierung der systemspezifischen Integrationsfehlertaxonomie des zu untersuchendes Systems in Abhängigkeit von den Anwendungsinformationen generiert. Mit anderen Worten werden neben den Systeminformationen auch die Anwendungsinformationen berücksichtigt, um die systemspezifische Integrationsfehlertaxonomie zu generieren, welche zum Prüfen des Systems vorgesehen ist. Die Anwendungsinformationen können beispielsweise einen Anwendungskontext und/oder ein Target-Environment des Systems beschreiben, in welchem die Service-Komponenten betrieben werden. Es kann somit vorgesehen sein, dass die systemspezifische Integrationsfehlertaxonomie sowohl basierend auf dem System, als auch basierend auf dem Anwendungskontext bereitgestellt wird. Dabei kann es vorgesehen sein, nur die Integrationsfehlerarten der systemspezifischen Integrationsfehlertaxonomie hinzuzufügen, welche sowohl für das System, als auch den Anwendungskontext relevant sind.

Das Auswahlverfahren sieht auch vor, dass zumindest einigen der Integrationsfehlerarten der systemspezifischen Integrationsfehlertaxonomie jeweilige der Integrationsfehlererkennungsverfahren aus der Basis- Integrationsfehlertaxonomie in Abhängigkeit von den Anwendungsinformationen zugeordnet werden. Mit anderen Worten hängen zusätzlich zu den Integrationsfehlerarten auch die ausgewählten Integrationsfehlererkennungsverfahren von den Anwendungsinformationen ab. Es ist somit vorgesehen, dass die Integrationsfehlererkennungsverfahren der systemspezifischen Integrationsfehlertaxonomie nicht nur in Abhängigkeit von dem System, sondern auch in Abhängigkeit von dem Anwendungskontext zugeordnet werden.

Die Weiterbildung bietet den Vorteil, dass die Auswahl der Integrationsfehlerarten auf den konkreten Anwendungsfall beschränkt werden kann.

Eine Weiterbildung der Erfindung sieht vor, dass das Spezialisierungsverfahren eine Ausgabe eines Hinweissignals umfasst, welches die relevanten Integrationsfehlerarten der systemspezifischen Integrationsfehlertaxonomie beschreibt. Mit anderen Worten wird im Rahmen des Spezialisierungsverfahrens die systemspezifische Integrationsfehlertaxonomie ermittelt, welche die relevanten Integrationsfehlerarten für das zu überprüfende System umfasst. Die relevanten Integrationsfehlerarten, welche durch die Prüfvorrichtung für das System ermittelt wurden, werden durch die Prüfvorrichtung durch das Hinweissignal ausgegeben. Die Ausgabe kann beispielsweise an eine Vorrichtung erfolgen, welche mit einer Benutzerschnittstelle ausgestattet ist, um einen Nutzer über die möglichen Integrationsfehlerarten zu informieren.

Eine Weiterbildung der Erfindung sieht vor, dass die Untersuchung des Systems gemäß der systemspezifischen Integrationsfehlertaxonomie eine Ausgabe eines Anweisungssignals gemäß zumindest eines Integrationsfehlererkennungsverfahrens durch die Prüfvorrichtung umfasst. Mit anderen Worten ist es vorgesehen, dass zur Erkennung des betreffenden Integrationsfehlers nach dem Integrationsfehlererkennungsverfahren das Anweisungssignal durch die Prüfvorrichtung ausgegeben wird. Das Anweisungssignal kann beispielsweise dazu vorgesehen sein, eine Vorrichtung zur Überprüfung des Systems anzuleiten. Dies kann beispielsweise erforderlich sein, wenn die Prüfvorrichtung nicht eigenständig zur Durchführung des Integrationsfehlererkennungsverfahrens eingerichtet ist. Das Anweisungssignal kann beispielsweise eine Liste von Anweisungen umfassen, die durch die Vorrichtung auszuführen ist. Das Anweisungssignal kann auch Anweisungen an einen Nutzer umfassen, die in dazu anleiten können, das System in einen vorgegebenen Zustand zu setzen, oder bestimmte Handlungen in Bezug auf das System durchzuführen. Das Anweisungssignal kann beispielsweise an eine Vorrichtung ausgegeben werden, welche zur Untersuchung des Systems eingerichtet ist. Die Untersuchung des Systems umfasst ein Empfangen eines Ergebnissignals durch die Prüfvorrichtung. Das Ergebnissignal kann Ergebnisse und/oder Rückmeldungen von Anweisungen, welche gemäß dem Anweisungssignale durchgeführt werden umfassen. Das Ergebnissignal kann durch die in dem Anweisungssignal adressierte Vorrichtung bereitgestellt sein und beispielsweise von einer Benutzereingabe abhängen. In einem weiteren Schritt erfolgt ein Abgleich der Ergebnisse des Ergebnissignals mit erwarteten Werten. Mit anderen Worten wird durch die Prüfvorrichtung ermittelt, ob die Ergebnisse mit erwarteten Werten übereinstimmen oder von diesen abweichen. Basierend auf dem Abgleich wird durch die Prüfvorrichtung ein Vorliegen eines Integrationsfehlers festgestellt. Die Weiterbildung ergibt den Vorteil, dass durch die Prüfvorrichtung Integrationsfehlererkennungsverfahren durchgeführt werden können, die eine Einbindung weiterer Vorrichtungen oder eines Nutzers erfordern.

Eine Weiterbildung der Erfindung sieht vor, dass die Untersuchung des Systems ein Ansteuern des Systems gemäß dem Integrationsfehlererkennungsverfahren durch die Prüfvorrichtung umfasst. Mit anderen Worten kann es vorgesehen sein, dass die Prüfvorrichtung über eine Schnittstelle direkt und unmittelbar mit dem System verbunden ist. Die Prüfvorrichtung ist demnach dazu eingerichtet, das System zur Durchführung der Integrationsfehlererkennungsverfahren anzusteuern und/oder vorgegebene Werte gemäß dem Integrationsfehlererkennungsverfahren aus dem System abzurufen, um den Integrationsfehler zu erkennen. Die Weiterbildung ergibt den Vorteil, dass ein automatisches Überprüfen des Systems durch die Prüfvorrichtung ermöglicht ist.

Eine Weiterbildung der Erfindung sieht vor, dass die Untersuchung des Systems eine Ermittlung einer Abdeckung der systemspezifischen Integrationsfehlertaxonomie umfasst. Mit anderen Worten ist es vorgesehen, dass die Prüfvorrichtung die Abdeckung ermittelt, welche beschreibt in welchem Umfang das System auf die Integrationsfehlerarten gemäß der systemspezifischen Integrationsfehlertaxonomie geprüft wurde. Die die Abdeckung kann von Faktoren wie einer Anzahl und Art der Tests, eine Qualität der Testdaten, eine Automatisierung und den Prioritätswerten der getesteten Integrationsfehlerarten abhängen. Es ist vorgesehen, dass die Abdeckung in dem Integrationsfehlerprotokoll beschrieben wird und die Ermittlung der Bewertung des Systems in Abhängigkeit von der Abdeckung erfolgt.

Eine Weiterbildung der Erfindung sieht vor, dass jeweiligen Integrationsfehlerarten der systemspezifischen Integrationsfehlertaxonomie jeweilige Prioritätswerte zugeordnet sind, wobei eine Reihenfolge der Prüfung der Integrationsfehlerarten der systemspezifischen Integrationsfehlertaxonomie von ihren Prioritätswerten abhängt. Die Prioritätswerte sind dazu vorgesehen, die relevanten Integrationsfehlerkategorien in der systemspezifischen Integrationsfehlertaxonomie entsprechend ihrer Bedeutung für das System für das Prüfverfahren zu priorisieren. Bei der Zuordnung der Prioritätswerte kann berücksichtigt werden, welche Integrationsfehlerkategorien eine höhere Wahrscheinlichkeit haben, zu schwerwiegenden Problemen im System zu führen oder welche Integrationsfehler eine größere Auswirkung auf die Funktionalität des Systems haben. Die Prüfvorrichtung kann dazu eingerichtet sein, eine Reihenfolge der Abarbeitung der relevanten Integrationsfehlerkategorien der systemspezifischen Integrationsfehlertaxonomie in dem Prüfverfahren gemäß der Prioritätswerte festzulegen. Es kann insbesondere vorgesehen sein, die Integrationsfehlerkategorien, denen gemäß ihrem Prioritätswert eine höhere Priorität zugeordnet ist, zuerst zu überprüfen.

Die Priorisierung kann sicherstellen, dass die begrenzten Ressourcen der Prüfvorrichtung für das Identifizieren von Integrationsfehlern gezielt auf die bedeutenderen Integrationsfehlerarten im System konzentriert werden können.

Eine Weiterbildung der Erfindung sieht vor, dass die Funktionsbewertung des Systems von den jeweiligen Prioritätswerten der gefundenen Integrationsfehler abhängt. Mit anderen Worten sind den Integrationsfehlern in der systemspezifischen Integrationsfehlertaxonomie die jeweilige Prioritätswerte zugeordnet. Die Prioritätswerte können von verschiedenen Faktoren abhängen, wie beispielsweise der Häufigkeit des Auftretens des Integrationsfehlers, der Auswirkungen des Integrationsfehlers auf das System und der Wahrscheinlichkeit seines Auftretens. Ein höherer Prioritätswert eines gefundenen Integrationsfehlers kann bedeuten, dass die Funktionalität des Systems durch den Integrationsfehler wahrscheinlich und/oder in einem relativ großen Umfang beeinträchtigt ist. Eine niedrigere Priorität kann hingegen darauf hindeuten, dass der Integrationsfehler weniger Auswirkungen auf das System hat und daher die Funktionalität des Systems durch den Integrationsfehler kaum und/oder in einem relativ geringem Umfang beeinträchtigt ist. Werden beispielsweise relativ wenige Integrationsfehler gefunden, denen zudem jeweils geringe Prioritätswerte zugeordnet sind, kann die Bewertung des Systems bestimmen, dass das System nahezu uneingeschränkt funktionsfähig ist. Ein einziger identifizierter Integrationsfehler in dem System, dem ein relativ hoher Prioritätswert zugeordnet ist, kann dagegen dazu führen, dass das System als nicht funktionsfähig bewertet wird. Die Weiterbildung ergibt den Vorteil, dass eine Auswirkung eines Integrationsfehlers auf die Funktionsfähigkeit besser bewertet werden kann.

Eine Weiterbildung der Erfindung sieht vor, dass das Verfahren einen Empfang einer aktualisierten Basis-Integrationsfehlertaxonomie und/oder einer aktualisierten Liste durch die Prüfvorrichtung umfasst. Mit anderen Worten wird der Prüfvorrichtung die aktualisiert Basis-Integrationsfehlertaxonomie bereitgestellt. Die Prüfvorrichtung ist dazu eingerichtet, die in der Prüfvorrichtung gespeicherte Basis-Integrationsfehlertaxonomie durch die aktualisierte Basis-Integrationsfehlertaxonomie zu aktualisieren. Es kann beispielsweise vorgesehen sein, dass eine Zuordnung der Integrationsfehlerarten geändert wird oder die Basis-Integrationsfehlertaxonomie um weitere Integrationsfehlerarten ergänzt wird. Zusätzlich und/oder alternativ dazu umfasst das Verfahren den Empfang der aktualisierten Anwendungsliste durch die Prüfvorrichtung. Mit anderen Worten wird der Prüfvorrichtung die Liste der Integrationsfehlererkennungsverfahren bereitgestellt. Es kann vorgesehen sein, dass die aktualisierte Liste neue oder geänderte der Integrationsfehlererkennungsverfahren umfasst. Die Prüfvorrichtung ist dazu eingerichtet, die Zuordnung der Integrationsfehlerarten zu den Integrationsfehlererkennungsverfahren basierend auf der aktualisierten Integrationsfehlertaxonomie und/oder der aktualisierten Liste zu aktualisieren. Dadurch ergibt sich der Vorteil, dass neue Erkenntnisse in auftretenden Integrationsfehlern oder neue Integrationsfehlererkennungsverfahren zum Durchführen der Untersuchung bereitgestellt werden können.

Eine Weiterbildung der Erfindung sieht vor, dass basierend auf der aktualisierten Basis-Integrationsfehlertaxonomie die systemspezifische Integrationsfehlertaxonomie aktualisiert wird. Es kann beispielsweise vorgesehen sein, dass der Basis-Integrationsfehlertaxonomie neue Integrationsfehlerarten bereitgestellt sind oder neue Integrationsfehlererkennungsverfahren, wodurch eine Aktualisierung der systemspezifischen Integrationsfehlertaxonomie erforderlich sein kann. Die systemspezifische Integrationsfehlertaxonomie kann dementsprechend basierend auf der aktualisierten Basis-Integrationsfehlertaxonomie neu generiert werden.

Ein zweiter Aspekt der Erfindung betrifft eine Prüfvorrichtung. Die Prüfvorrichtung ist dazu eingerichtet, ein Verfahren gemäß dem ersten Aspekt der vorliegenden Erfindung durchzuführen.

Bei dem vorgestellten Verfahren handelt es sich insbesondere im Wesentlichen um ein computerimplementiertes Verfahren. Daher betrifft ein dritter Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem ersten Aspekt durchzuführen.

Ebenfalls betrifft die Erfindung als vierten Aspekt ein computerlesbares Speichermedium mit dem Computerprogrammprodukt nach dem dritten Aspekt.

Unter einer Recheneinheit / elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), einen oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Integrationsfehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
FIG 1 eine schematische Darstellung eines Verfahrens zur Identifikation von Integrationsfehlern in einem System anhand einer systemspezifischen Integrationsfehlertaxonomie durch eine Prüfvorrichtung; und
FIG 2 eine schematische Darstellung einer Basis-Integrationsfehlertaxonomie.

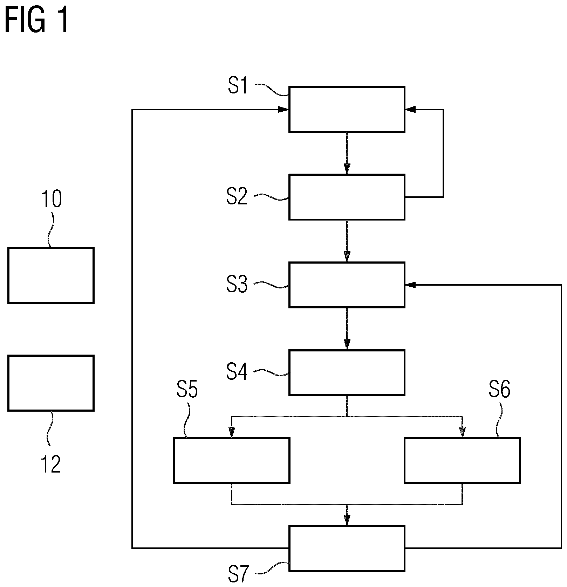

FIG 1 zeigt eine schematische Darstellung eines Verfahrens zur Identifikation von Integrationsfehlern in einem System anhand einer systemspezifischen Integrationsfehlertaxonomie durch eine Prüfvorrichtung.

Ein erster Schritt des Verfahrens S1 kann eine Bereitstellung einer Basis-Integrationsfehlertaxonomie 14 an die Prüfvorrichtung 10 umfassen. Die Basis-Integrationsfehlertaxonomie 14 kann Integrationsfehlerklassen 20 definieren, wobei den jeweiligen Integrationsfehlerklassen 20 jeweilige Integrationsfehlerarten 22 zugewiesen sein können. Die Integrationsfehlerarten 22 und Integrationsfehlerklassen 20 können für eine Vielzahl unterschiedlicher Systeme 12 vorgesehen sein. Mit anderen Worten können die Integrationsfehlerarten 22 Integrationsfehler beschreiben, die in dem System 12 allgemein auftreten können.

In einem zweiten Schritt S2 kann eine Zuordnung von Integrationsfehlererkennungsverfahren 26 zu den Integrationsfehlern, welche in der Basis-Integrationsfehlertaxonomie 14 beschrieben sind, erfolgen. In dem Schritt kann durch die Prüfvorrichtung 10 eine Verfahrensliste empfangen werden, welche bereitgestellte Integrationsfehlererkennungsverfahren 26 umfassen kann. Die Integrationsfehlererkennungsverfahren 26 können jeweiligen Integrationsfehlerarten 22 zugeordnet sein, die durch das jeweilige Integrationsfehlererkennungsverfahren 26 identifiziert werden. In dem Schritt erfolgt ein Durchführen eines Zuordnungsverfahrens, wobei zumindest einigen der Integrationsfehlerarten 22 der Basis-Integrationsfehlertaxonomie 14 jeweilige der Integrationsfehlererkennungsverfahren 26 zugeordnet werden. Mit anderen Worten wird in dem Zuordnungsverfahren die Basis-Integrationsfehlertaxonomie 14 durch die bereitgestellten Integrationsfehlererkennungsverfahren 26 ergänzt, durch welche die betreffenden in den in der Basis-Integrationsfehlertaxonomie 14 angeführten Integrationsfehlerarten 22 erkannt werden können.

Ein dritter Schritt S3 kann eine Erstellung einer systemspezifischen Integrationsfehlertaxonomie 16 umfassen. In dem Schritt kann es vorgesehen sein, dass durch die Prüfvorrichtung 10 Systeminformationen empfangen werden, welche das zu untersuchende System 12 beschreiben. Die Systeminformation können beispielsweise Hardwaremodule und/oder Softwaremodule des Systems 12 beschreiben. In dem Schritt kann es auch vorgesehen sein, dass durch die Prüfvorrichtung 10 Anwendungsinformationen empfangen werden, welche eine Anwendung des Systems 12 beschreiben. Basierend auf der Basis-Integrationsfehlertaxonomie 14 wird durch die Prüfvorrichtung 10 in Abhängigkeit von dem Systeminformation und der Anwendungsinformationen das Spezialisierungsverfahren durchgeführt, wobei auf Basis der Basis-Integrationsfehlertaxonomie 14 die systemspezifische Integrationsfehlertaxonomie 16 des zu untersuchenden Systems 12 generiert wird. Die systemspezifische Integrationsfehlertaxonomie 16 umfasst ebenfalls Integrationsfehlerklassen 20 in die jeweilige Integrationsfehlerarten 22 zugewiesen sind. Dabei handelt es sich jedoch um eine spezielle Integrationsfehlertaxonomie, welche auf Integrationsfehlerarten 22 beschränkt sein kann, welche für das System 12 relevant sind. Die relevanten Integrationsfehlerarten 22 werden durch die Prüfvorrichtung 10 basierend auf den Systeminformationen und den Anwendungsinformationen ermittelt. Zur Erkennung der jeweiligen Integrationsfehlerarten 22 wird durch die Prüfvorrichtung 10 ein Auswahlverfahren durchgeführt. Das Auswahlverfahren ist dazu vorgesehen, die Integrationsfehlererkennungsverfahren 26 die den jeweiligen Integrationsfehlerarten 22 in der Basis-Taxonomie zugeordnet sind, auszuwählen und der systemspezifischen Integrationsfehlertaxonomie 16 zuzuordnen. Dabei können die Integrationsfehlererkennungsverfahren 26 ausgewählt werden, welche für das System 12 und die Anwendung geeignet sind

Ein weiterer Schritt umfasst eine Untersuchung des Systems 12 gemäß der systemspezifischen Integrationsfehlertaxonomie 16. Im Rahmen der Untersuchung des Systems 12 gemäß der systemspezifischen Integrationsfehlertaxonomie 16 kann ein Integrationsfehlerprotokoll generiert werden, welches die in dem System 12 durch die Integrationsfehlererkennungsverfahren 26 gefunden Integrationsfehler beschreibt. Das Integrationsfehlerprotokoll kann auch eine Abdeckung des Systems 12 durch die Untersuchung beschreiben.

Die Integrationsfehlerfindung kann automatisiert durch die Prüfvorrichtung 10 selbst erfolgen, wobei das System 12 gemäß einem betreffenden Integrationsfehlererkennungsverfahren 26 gemäß der systemspezifischen Integrationsfehlertaxonomie 16 untersucht werden kann. Die Untersuchung kann auch indirekte Untersuchungsverfahren umfassen, wobei durch die Prüfvorrichtung 10 gemäß dem Integrationsfehlererkennungsverfahren 26 Anweisungssignale ausgegeben werden. Die Anweisungssignale können beispielsweise eine weitere Vorrichtung zur Durchführung der Untersuchung des Systems 12 anleiten oder eine Ausgabe vom Benutzerausgaben bewirken. Die Prüfvorrichtung 10 kann Ergebnissignale als Antwort auf die Anweisungssignale empfangen. Die Ergebnissignale können beispielsweise der Prüfvorrichtung 10 durch die weitere Vorrichtung bereitgestellt sein und Ergebnisse der Durchführung der Anweisung der Anweisungssignale beschreiben. Die Prüfvorrichtung 10 kann die Ergebnisse der Ergebnissignale mit erwarteten Werten abgleichen und basierend auf dem Abgleich ein Vorliegen einer Integrationsfehlerarten 22 feststellen. Basierend auf dem Integrationsfehlerprotokoll kann eine Bewertung des Systems 12 erfolgen, wobei eine Bewertung des Systems 12 in Abhängigkeit von dem Integrationsfehlerprotokoll ermittelt werden kann. Basierend auf der Bewertung des Systems 12 kann ein Ausgabesignal ausgeben werden, welches die Bewertung des Systems 12 umfassen kann. Das Ausgabesignal kann beispielsweise dazu vorgesehen sein, einen Betrieb des Systems 12 freizugeben oder zu sperren.

Um eine Änderung der Basis-Integrationsfehlertaxonomie 14 und/oder der bereitgestellten Integrationsfehlererkennungsverfahren 26 ermöglichen zu können, kann es vorgesehen sein, dass die Prüfvorrichtung 10 dazu vorgesehen ist, regelmäßig ein Vorliegen einer aktualisierten Basis-Integrationsfehlertaxonomie 14 zu überprüfen und die vorliegende Basis-Integrationsfehlertaxonomie 14 gegebenenfalls gemäß der aktualisierten Basis-Integrationsfehlertaxonomie 14 zu ergänzen. Auch kann die Prüfvorrichtung 10 dazu eingerichtet sein, eine aktualisierte Verfahrensliste zu empfangen und die bereitgestellten Integrationsfehlererkennungsverfahren 26 zu aktualisieren. Darauf aufbauend kann die Prüfvorrichtung 10 die Zuordnung der Integrationsfehlererkennungsverfahren 26 zu den Integrationsfehlerarten 22 in der Basis-Integrationsfehlertaxonomie 14 aktualisieren.

Die Prüfvorrichtung 10 kann dazu eingerichtet sein, die systemspezifische Integrationsfehlertaxonomie 16 bei einer Änderung der Basis-Integrationsfehlertaxonomie 14 durch die Aktualisierung und/oder durch die aktualisierte Verfahrensliste ebenfalls zu aktualisieren, um die Änderung der Basis-Integrationsfehlertaxonomie 14 und oder der bereitgestellten Integrationsfehlererkennungsverfahren 26 zu berücksichtigen. Diese Schritte können beispielsweise automatisiert und regelmäßig durch die Prüfvorrichtung 10 durchgeführt werden, um eine zuverlässige Integrationsfehlererkennung in dem System 12 zu ermöglichen.

Mit anderen Worten, das beschriebene Verfahren kann wie folgt durchgeführt werden: Ein systematisches Review der Literatur, die zur Auswahl der SOA-Taxonomie als Basis geführt hat, kann durchgeführt werden. Anschließend kann die SOA-Taxonomie anhand von Umbenennung von Kategorien, Restrukturierung und Anpassung der Unterkategorien angepasst werden. Dabei können neue Unterkategorien hinzugefügt und bestehende gestrichen werden.

Es kann auch eine Adaption der Taxonomie auf Basis von Interviews mit Experten aus der Anwendung erfolgen, wobei eine Auswahl der Experten getroffen, die Interviews durchgeführt und anschließend ausgewertet werden können. Die validierte Taxonomie kann dann durch eine Umfrage bei Experten mit Erfahrung im Bereich Entwicklung und Betrieb von Systemen mit Service-Komponenten finalisiert werden.

Als Output kann entstehen: eine Basis-Integrationsfehlertaxonomie mit Beschreibung der Integrationsfehlerklassen.

In einem weiteren Schritt, kann die Identifikation von Methoden zur Integrationsfehlerfindung und Prävention erfolgen. Hierbei kann die Basis-Integrationsfehlertaxonomie als Input verwendet werden, zusammen mit bekannten oder verfügbaren Test- und Präventionsmethoden.

Es kann ein Mapping von Integrationsfehlerklassen und Test- und Präventionsmethoden erfolgen, wie zum Beispiel: Service Description Faults können mittels Syntax Checker und Contract Testing ermittelt werden, Execution Faults durch Mutation Testing und Composition Faults durch API Testing.

Als Output kann entstehen: eine erweiterte Version der Basis-Integrationsfehlertaxonomie, bei der Integrationsfehlerklassen mit Methoden zur manuellen oder automatisierten Integrationsfehlerfindung verlinkt sind. Zudem können Identifikation von Integrationsfehlerkategorien ohne passende Test-/Präventionsmethoden und Hinweise zur Integrationsfehlerbehebung und Prävention bereitgestellt werden.

Die Erstellung einer systemspezifischen Taxonomie ist ein wichtiger Schritt, um potenzielle Risiken im System zu identifizieren und Maßnahmen zur Integrationsfehlerprävention zu ergreifen. Dazu kann die Basis-Integrationsfehlertaxonomie anhand des Wissens über das zu prüfende System und den Anwendungskontext angepasst werden. Es können relevante Kategorien ausgewählt und priorisiert werden, um eine systemspezifische Integrationsfehlertaxonomie zu erstellen. Diese kann Hinweise auf potenzielle Risiken liefern und damit Input für das Systemdesign geben. Anschließend kann die Auswahl von Methoden zur Integrationsfehlerfindung anhand der systemspezifischen Integrationsfehlertaxonomie (inklusive Priorisierung) erfolgen. Dabei sollte auch das Wissen über den Anwendungskontext, wie z.B. Target-Environment, Implementierungsaufwand und Kosten, berücksichtigt werden. Durch die Auswahl geeigneter Integrationsfehlerfindungsmethoden können Integrationsfehlerklassen mit verlinkten Methoden zur manuellen oder automatisierten Integrationsfehlerfindung erstellt werden.

Manuell oder automatisiert kann nach Integrationsfehlern gesucht werden, abhängig von der Art des Integrationsfehlers und den verfügbaren Methoden. Ein manuelles Vorgehen kann beispielsweise anhand von Checklisten erfolgen, während automatisierte Verfahren mit Hilfe von Tools wie Contract Testing durchgeführt werden können. Es ist auch möglich, ein hybrides Vorgehen zu wählen, bei dem verschiedene Methoden kombiniert werden, je nach Integrationsfehlerkategorie und verfügbarer Technologie. Das Ziel dieser Schritte ist es, priorisierte Integrationsfehlerklassen als Ausgangspunkt für gezielte Testaktivitäten zu identifizieren, Integrationsfehlerinstanzen zu finden und eine geclusterte und priorisierte Übersicht der Integrationsfehler entlang der Integrationsfehlertaxonomie zu erstellen. Im Anschluss an die Integrationsfehlerfindung kann dann eine Beurteilung der Korrektheit des Systems vorgenommen werden. Hierzu wird zunächst die Abdeckung der systemspezifischen Taxonomie durch die verwendeten Test- und Präventionsmethoden bestimmt, wobei die Prioritäten und Integrationsfehlerhäufigkeiten berücksichtigt werden. Anhand der gefundenen Integrationsfehler kann dann ein Qualitätsurteil abgeleitet werden. Insgesamt ermöglicht diese Vorgehensweise einen indirekten Schluss auf den Grad der Korrektheit/Integrationsfehlerfreiheit des Systems, was signifikant besser ist als ohne Verwendung einer Integrationsfehlertaxonomie. Das Ergebnis ist ein Quality Rating des Systems.

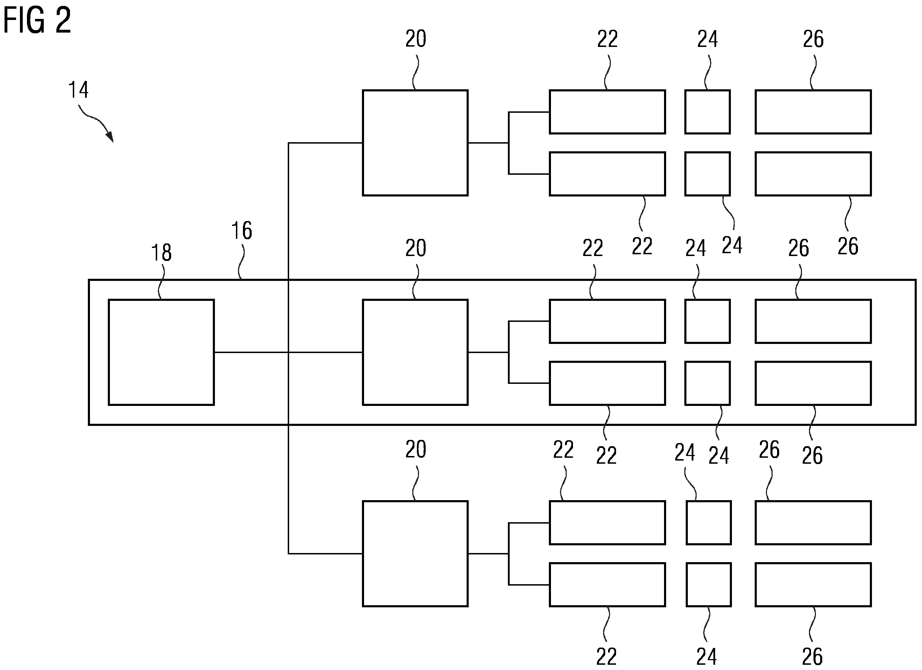

FIG 2 eine schematische Darstellung einer Basis-Integrationsfehlertaxonomie 14.

Eine Basis-Integrationsfehlertaxonomie 14 ist ein Rahmenwerk zur Klassifizierung von Integrationsfehlern und Störungen in komplexen Systemen 12, das eine hierarchische Struktur aus verschiedenen Ebenen und Knoten umfasst. Diese Basis-Integrationsfehlertaxonomie 14 dient als Grundlage für die Erstellung einer systemspezifischen Integrationsfehlertaxonomie 16, die während der Laufzeit eines Systems 12 erstellt wird, indem sie basierend auf Systeminformationen und Anwendungsinformationen an das System 12 angepasst wird.

Die Basis-Integrationsfehlertaxonomie 14 kann in verschiedene Integrationsfehlerklassen 20 unterteilt sein, welche beispielsweise Hardware-, Software- und Netzwerkfehler umfassen können. Jede dieser Integrationsfehlerklassen 20 enthält Unterklassen von Integrationsfehlern, wie beispielsweise Speicherfehler, Prozessorfehler und Stromversorgungsfehler für die Integrationsfehlerklasse 20 der Hardwarefehler. Die Basis-Integrationsfehlertaxonomie 14 definiert auch verschiedene Integrationsfehlerarten 22 innerhalb jeder Unterklasse, um eine granulare Ebene der Integrationsfehlerklassifizierung zu erreichen.

Die Basis-Integrationsfehlertaxonomie 14 umfasst nach dem Zuordnungsverfahren auch verschiedene Integrationsfehlererkennungsverfahren 26 die jeweiligen Integrationsfehlerarten 22 zugeordnet sein können. Diese Integrationsfehlererkennungsverfahren 26 werden verwendet, um potenzielle Integrationsfehler der betreffenden Integrationsfehlerart 22 im System 12 zu identifizieren und zu klassifizieren. Die Integrationsfehlererkennungsverfahren 26 können mit den entsprechenden Integrationsfehlerarten 22 der Basis-Integrationsfehlertaxonomie 14 verknüpft sein. Den Integrationsfehlerarten 22 können auch jeweilige Prioritätswerte 24 zugeordnet sein. Insgesamt dient die Basis-Integrationsfehlertaxonomie 14 als Rahmenwerk zur Klassifizierung von Integrationsfehlern in den Systemen 12. Durch die Basis-Integrationsfehlertaxonomie 14 kann der Prüfvorrichtung 10 eine standardisierte Methode zur Identifikation, Klassifizierung und Behebung der Integrationsfehler in dem System 12 bereitgestellt sein, welche die Prüfvorrichtung 10 als Grundlage zur Generierung der systemspezifischen Integrationsfehlertaxonomie 16 verwenden kann.

Die Basis-Integrationsfehlertaxonomie 14 dient als Ausgangspunkt für die Erstellung der systemspezifischen Integrationsfehlertaxonomie 16. Die systemspezifische Integrationsfehlertaxonomie 16 wird durch Berücksichtigung der Systeminformationen und der Anwendungsinformationen aus der Basis-Integrationsfehlertaxonomie 14 generiert. Die systemspezifische Integrationsfehlertaxonomie 16 wird durch Auswahl und Priorisierung relevanter Integrationsfehlerklassen 20 aus der Basis-Integrationsfehlertaxonomie 14 erstellt, um potenzielle Integrationsfehler in dem konkreten System 12 zu identifizieren. Dies ist notwendig, um die Taxonomie an die Besonderheiten des spezifischen Systems 12 anzupassen und sicherzustellen, dass alle relevanten Integrationsfehlerklassen 20 berücksichtigt werden. Die systemspezifische Integrationsfehlertaxonomie 16 beschreibt somit die Auswahl der geeigneten Integrationsfehlererkennungsverfahren 26 zur Erkennung der Integrationsfehler im Rahmen der Prüfung des Systems 12 und ermöglicht ein Qualitätsurteil über das System 12, indem eine Abdeckung der systemspezifischen Integrationsfehlertaxonomie 16 durch die Integrationsfehlererkennungsverfahren 26 bestimmt wird.

Die gezeigte Basis-Integrationsfehlertaxonomie 14 kann die Integrationsfehler aufzeigen, die mit Microservicekomponenten zusammenhängen können.

## Patentansprüche

1. Verfahren zur Identifikation von Integrationsfehlern bei einer Integration von Service-Komponenten in einem System (12) anhand einer systemspezifischen Integrationsfehlertaxonomie (16) durch eine Prüfvorrichtung (10), wobei in der Prüfvorrichtung (10) eine Basis-Integrationsfehlertaxonomie (14) gespeichert ist, die Integrationsfehlerklassen (20) definiert, wobei den jeweiligen Integrationsfehlerklassen (20) jeweilige Integrationsfehlerarten (22) zugewiesen sind, wobei das Verfahren die folgenden durch eine Prüfvorrichtung (10) durchzuführenden Schritte umfasst:
- Empfangen einer Verfahrensliste, umfassend bereitgestellte Integrationsfehlererkennungsverfahren (26), wobei den jeweiligen Integrationsfehlererkennungsverfahren (26) jeweilige Integrationsfehlerarten (22) zugeordnet sind, die durch das jeweilige Integrationsfehlererkennungsverfahren (26) identifiziert werden;
- Durchführen eines Zuordnungsverfahrens, wobei zumindest einigen der Integrationsfehlerarten (22) der Basis-Integrationsfehlertaxonomie (14) jeweilige der Integrationsfehlererkennungsverfahren (26) zugeordnet werden;
- Empfangen von Systeminformationen über das System (12);
- Durchführen eines Spezialisierungsverfahrens, wobei basierend auf der Basis-Integrationsfehlertaxonomie (14) eine systemspezifischen Integrationsfehlertaxonomie (16) zur Untersuchung des Systems (12) in Abhängigkeit von den Systeminformationen generiert wird;
- Durchführen eines Auswahlverfahrens, wobei zumindest einigen der Integrationsfehlerarten (22) der systemspezifischen Integrationsfehlertaxonomie (16) jeweilige der Integrationsfehlererkennungsverfahren (26) in Abhängigkeit von den Systeminformationen zugeordnet werden;
- Untersuchung des Systems (12) gemäß der systemspezifischen Integrationsfehlertaxonomie (16), und Generierung eines Integrationsfehlerprotokolls umfassend die in dem System (12) durch die Integrationsfehlererkennungsverfahren (26) gefundenen Integrationsfehler;
- Ermitteln einer Funktionsbewertung des Systems (12) in Abhängigkeit von dem Integrationsfehlerprotokoll; und
- Ausgabe eines Ausgabesignals, welches die Funktionsbewertung des Systems (12) umfasst.

2. Verfahren nach Anspruch 1, wobei:
- das Verfahren ein Empfangen von Anwendungsinformationen über eine Anwendung des Systems (12) durch die Prüfvorrichtung (10) umfasst;
- die systemspezifische Integrationsfehlertaxonomie (16) zur Untersuchung des Systems (12) in dem Spezialisierungsverfahren in Abhängigkeit von den Anwendungsinformationen generiert wird;
- und zumindest einigen der Integrationsfehlerarten (22) der systemspezifischen Integrationsfehlertaxonomie (16) in dem Auswahlverfahren jeweilige der Integrationsfehlererkennungsverfahren (26) in Abhängigkeit von den Anwendungsinformationen zugeordnet werden.

3. Verfahren nach Anspruch 1 oder 2, wobei das Spezialisierungsverfahren eine Ausgabe eines Hinweissignals durch die Prüfvorrichtung (10) umfasst, welches die relevanten Integrationsfehlerarten (22) der systemspezifischen Integrationsfehlertaxonomie (16) beschreibt.

4. Verfahren nach einem der vorhergehenden Ansprüche, wobei die Untersuchung des Systems (12) gemäß zumindest einem der Integrationsfehlererkennungsverfahren (26) die folgenden durch die Prüfvorrichtung (10) durchzuführenden Schritte umfasst:
- Ausgabe eines Anweisungssignals, umfassend Anweisungen zum Prüfen und/oder Betreiben des Systems (12);
- Empfangen eines Ergebnissignals, wobei das Ergebnissignal Ergebnisse der Durchführung der Anweisungen betreffend das System (12) umfasst;
- Abgleich der Ergebnisse mit erwarteten Werten; und
- Ermittlung eines Vorliegens eines Integrationsfehlers basierend auf dem Abgleich des Ergebnisses mit den erwarteten Werten.

5. Verfahren nach einem der vorhergehenden Ansprüche, wobei die Untersuchung des Systems (12) gemäß zumindest einem der Integrationsfehlererkennungsverfahren (26) ein direktes
Ansteuern des Systems (12) und Ermitteln eines Vorliegens des Integrationsfehlers umfasst.

6. Verfahren nach einem der vorhergehenden Ansprüche, wobei
die Untersuchung des Systems (12) die folgenden durch die Prüfvorrichtung (10) durchzuführenden Schritte umfasst:
- Ermittlung einer in dem Prüfungsverfahren erreichten Abdeckung der systemspezifischen Integrationsfehlertaxonomie (16);
- Protokollieren der erreichten Abdeckung der systemspezifischen Integrationsfehlertaxonomie (16) in dem Integrationsfehlerprotokoll; und
- Ermitteln der Funktionsbewertung des Systems (12) in Abhängigkeit von der erreichten Abdeckung der systemspezifischen Integrationsfehlertaxonomie (16).

7. Verfahren nach einem der vorhergehenden Ansprüche, wobei
- jeweiligen Integrationsfehlerarten (22) der systemspezifischen Integrationsfehlertaxonomie (16) jeweilige Prioritätswerte (24) zugeordnet sind; und
- eine Reihenfolge der Prüfung der Integrationsfehlerarten (22) der systemspezifischen Integrationsfehlertaxonomie (16) in dem Prüfverfahren von den Prioritätswerten (24) der Integrationsfehlerarten (22) abhängt.

8. Verfahren nach einem der vorhergehenden Ansprüche, wobei die Funktionsbewertung des Systems (12) von den jeweiligen Prioritätswerten (24) der gefundenen Integrationsfehler abhängt.

9. Verfahren nach einem der vorhergehenden Ansprüche, wobei das Verfahren die folgenden durch die Prüfvorrichtung (10) durchzuführenden Schritte umfasst:
- Empfang einer aktualisierten Basis-Integrationsfehlertaxonomie (14) und/oder einer aktualisierten Verfahrensliste; und
- Aktualisierung der Zuordnung der Integrationsfehlerarten (22) zu den Integrationsfehlererkennungsverfahren (26) basierend auf der aktualisierten Integrationsfehlertaxonomie und/oder der aktualisierten Verfahrensliste.

10. Verfahren nach Anspruch 9, wobei das Verfahren eine Aktualisierung der systemspezifischen Integrationsfehlertaxonomie (16) umfasst.

11. Prüfvorrichtung (10), eingerichtet zur Durchführung eines Verfahrens nach einem der Ansprüche 1 bis 9.

12. Computerprogramm, welches direkt in einen Speicher einer elektronischen Recheneinrichtung ladbar ist, mit Programm-Mitteln, um die Schritte des Verfahrens nach einem der Ansprüche 1 bis 10 auszuführen, wenn das Programm in der elektronischen Recheneinrichtung ausgeführt wird.

13. Elektronisch lesbarer Datenträger mit darauf gespeicherten elektronisch lesbaren Steuerinformationen, welche zumindest ein Computerprogramm nach Anspruch 12 umfassen und derart ausgestaltet sind, dass sie bei Verwendung des Datenträgers in einer elektronischen Recheneinrichtung ein Verfahren nach einem der Ansprüche 1 bis 10 durchführen.
